# EUROPÄISCHE PATENTSCHRIFT

(11) **EP 2 698 618 B1**
(45) Veröffentlichungstag und Bekanntmachung des Hinweises auf die Patenterteilung: **10.08.2016**
(21) Anmeldenummer: 13003110.7
(22) Anmeldetag: 19.06.2013
(51) Int. Cl.: G01M 11/06

(54) **Verfahren und Vorrichtung zum Bewerten einer Qualität eines Scheinwerfers**
Method and device for evaluating a quality of a headlamp
Procédé et dispositif d'évaluation de la qualité d'un phare

(30) Priorität: 18.08.2012 DE 102012016441
(43) Veröffentlichungstag der Anmeldung: 19.02.2014
(73) Patentinhaber: AUDI AG, 85045 Ingolstadt (DE)
(72) Erfinder: Brosinger, Manuel, 85080 Gaimersheim (DE)
(74) Vertreter: Thielmann, Frank

(56) Entgegenhaltungen:
- EP-A1- 1 640 700
- DE-A1- 4 122 531
- DE-A1-102010 033 351
- DE-A1-102011 109 440
- US-A- 2 003 797
- US-A1- 2007 080 289

## Beschreibung

Die Erfindung betrifft ein Verfahren zum Bewerten einer Qualität eines Scheinwerfers eines Kraftwagens sowie eine Vorrichtung zum Bewerten einer Qualität eines Scheinwerfers eines Kraftwagens.

Bei der Qualitätsbeurteilung von Scheinwerfern müssen Kriterien wie Homogenität der Lichtverteilung, Flackerneigung und Stabilität der Hell-Dunkel-Grenze des Scheinwerfers bewertet werden. Eine solche Bewertung kann in der Regel nicht im statischen Zustand erfolgen, da Vibrationen, wie sie beispielsweise von Motor und Fahrwerk in den Scheinwerfer eingetragen werden, deutliche Einflüsse auf die genannten Größen haben. So kann es beispielsweise bei Xenon-Scheinwerfern durch Vibrationen zu Resonanzschwingungen im Lichtbogen kommen, die sich durch ein störendes Flackern äußern.

Üblicherweise wird die Bewertung daher während des Fahrtbetriebs des Kraftwagens vorgenommen, wobei zur Betonung der Schwingungsanregung meist eine Rüttelstrecke befahren wird. Die eigentliche Bewertung wird qualitativ durch den Fahrer oder durch einen Beobachter außerhalb des Kraftwagens vorgenommen.

Die DE 41 22 531 A1 beschreibt ein Verfahren und eine Einrichtung zur Regelung der Leuchtweite eines Scheinwerfers eines Kraftfahrzeugs. Dafür wird mit einem Sensor die von den Scheinwerfern erzeugte tatsächliche Ausleuchtung einer Fahrbahn vor dem Kraftfahrzeug registriert und anhand eines Vergleichs dieser Ausleuchtung mit einer Soll-Ausleuchtung der Scheinwerfer eingestellt. In einer Ausführungsvariante des in DE 41 22 531 A1 beschriebenen Verfahrens werden die Scheinwerfer in wenigstens zwei Stellungen bewegt und dann festgestellt, ob die Abweichung von der ersten zur zweiten Stellung von einer Soll-Ausleuchtung zu- oder abnimmt.

Die DE 10 2011 109 440 A1 beschreibt ein Verfahren zum Kalibrieren und/oder Justieren mindestens eines Scheinwerfers und/oder einer Lichteinheit eines Fahrzeugs. Bei diesem Verfahren werden Bilder einer durch den zu justierenden Scheinwerfer beleuchteten Umgebung des Fahrzeugs insbesondere im Hinblick auf den Verlauf von Hell-Dunkel-Grenzen ausgewertet. Zu diesem Zweck kann zwischen verschiedenen Lichtverteilungen, welche jeweils spezifische Lichtfunktionen der Lichteinheit, gewechselt werden.

Die DE 10 2010 033 351 A1 befasst sich mit einer Verbesserung des Justierens eines Scheinwerfers, nicht aber mit einer qualitativen Bewertung des Betriebs eines Scheinwerfers. Weiterhin entnimmt der Fachmann der DE 10 2010 033 351 A1 die Lehre, dass gegebenenfalls ein Justieren von Teilsegmenten eines Scheinwerfers sinnvoll bzw. ausreichend ist. Für das Justieren wird auch ein Lichtkasten mit einer Kamera vorgeschlagen, wobei dieser nicht am Fahrzeug befestigt ist.

Die US 2 003 797 A, US 2007/080289 A1 und die EP 1 640 700 A1 behandeln jeweils eine Vorrichtung zum Prüfen der Einstellung eines Scheinwerfers eines Kraftfahrzeugs mit einem Lichtkasten.

Da auf diese Weise keine quantifizierbaren Werte bezüglich der Scheinwerferqualität erhalten werden, ist ein Vergleich unterschiedlicher Scheinwerfertypen oder der auch der Qualität des selben Scheinwerfers in unterschiedlichen Kraftwagen kaum möglich.

Es ist daher Aufgabe der vorliegenden Erfindung, ein Verfahren sowie eine Vorrichtung der eingangs genannten Art bereitzustellen, welche eine quantitative Bewertung der Scheinwerferqualität ermöglichen.

Diese Aufgabe wird durch ein Verfahren mit den Merkmalen des Patentanspruchs 1 sowie durch eine Vorrichtung mit den Merkmalen des Patentanspruchs 6 gelöst.

Bei einem erfindungsgemäßen Verfahren zum Bewerten einer Qualität eines Scheinwerfers eines Kraftwagens im Fahrtbetrieb und/oder im Betrieb auf einem Rüttelprüfstand wird der Scheinwerfer mittels einer Kamera beobachtet, wobei die Kamera auf den Scheinwerfer gerichtet ist, und ein Kamerabild und/oder eine zeitliche Abfolge von Kamerabildern gemäß zumindest eines vorgegebenen Kriteriums bewertet.

Es ist ferner erfindungsgemäß vorgesehen, dass das wenigstens eine vorgegebene Kriterium eine zeitliche Variation einer Helligkeit und/oder Helligkeitsverteilung umfasst. Hierdurch werden dynamische Effekte, wie wenigstens das eingangs erwähnte Lichtbogenflackern erfasst, quantifiziert und bewertet.

Auf diese Weise wird eine quantitative Qualitätskontrolle ermöglicht, die unabhängig vom subjektiven Eindruck eines Fahrers oder Beobachters zuverlässige Informationen über die Qualität des Scheinwerfers unter Fahrtbedingungen liefert. Insbesondere können so dynamische Veränderungen der Lichtqualität während der Fahrt, wie sie beispielsweise durch äußere Schwingungsanregungen zustande kommen können, zuverlässig erfasst und benotet werden. Neben einer verbesserten Qualitätskontrolle individueller Scheinwerfer ermöglicht das Verfahren zudem einen reproduzierbaren und quantitativen Vergleich unterschiedlicher Scheinwerfer- und/oder Fahrzeugtypen bezüglich ihrer Lichtqualität. Die quantitative Bewertung anhand von Messdaten erlaubt ferner einen exakten Vergleich mit vorgegebenen Sollwerten. Der Lichtkasten ermöglicht ferner eine Durchführung der Messungen bei Tageslicht, während bisherige subjektive Beobachtungen in der Regel nachts durchgeführt werden mussten.

In einer bevorzugten Ausführungsform der Erfindung umfasst das wenigstens eine vorgegebene Kriterium eine Helligkeitsverteilung. Diese ist in der Regel unabhängig von äußeren Schwingungsanregungen, so dass diese Bewertung schon anhand eines einzelnen Kamerabildes erfolgen kann. Als quantitatives Maß bietet sich hier beispielsweise die Helligkeitsdifferenz zwischen dem hellsten und dunkelsten Bildbereich an.

Zur Bestimmung der Helligkeitsverteilung wird vorzugsweise ein jeweiliges Kamerabild in eine vorgegebene Anzahl von Teilbildern aufgeteilt und die Helligkeit der jeweiligen Teilbilder bestimmt. Hierdurch wird die anfallende Datenmenge im Vergleich zu einer pixelweisen Analyse reduziert.

Um dynamische Effekte besonders gut zu erfassen, ist es vorteilhaft, für eine zeitliche Abfolge jeweiliger Teilbilder für jedes Teilbild ein Minimum, ein Mittelwert und ein Maximum der Helligkeit für einen vorgegebenen Zeitabschnitt zu bestimmen. Die zeitliche Variation dieser Parameter ist ein quantitatives Maß für das Flackern jedes Teilbildes.

In weiterer Ausgestaltung der Erfindung umfasst das wenigstens eine vorbestimmte Kriterium eine Lage einer Hell-Dunkel-Grenze des Scheinwerfers. Diese wird durch Schwingungen der Scheinwerferaufhängung beeinflusst. Eine zu starke Variation der Lage der Hell-Dunkel-Grenze kann im Straßenverkehr dazu führen, dass trotz korrekt eingestellter Scheinwerfer andere Verkehrsteilnehmer geblendet werden. Durch die quantitative Beurteilung können gegebenenfalls konstruktive Maßnahmen ergriffen werden, die dies verhindern.

Die Erfindung betrifft ferner eine Vorrichtung zum Bewerten einer Qualität eines Scheinwerfers eines Kraftwagens im Fahrtbetrieb und/oder im Betrieb auf einem Rüttelprüfstand, mit einem Lichtkasten, welcher an dem Kraftwagen befestigbar ist, so dass der Scheinwerfer in den Lichtkasten strahlt, wobei der Lichtkasten eine Kamera zum Beobachten des Scheinwerfers umfasst, wobei die Kamera auf den Scheinwerfer gerichtet ist, und eine Rechenmaschine zur Auswertung der durch die Kamera erfassten Bilddaten vorgesehen ist, wobei die Rechenmaschine zum Auswerten der Bilddaten nach zumindest einem vorgegebenen Kriterium und das wenigstens eine vorgegebene Kriterium eine zeitlich Variation einer Helligkeit und/oder Helligkeitsverteilung umfasst, mit dem das Lichtbogenflackern erfassbar, quantifizierbar und bewertbar ist.

Eine solche Vorrichtung ermöglicht die Durchführung des oben beschriebenen Verfahrens und führt daher zu den bereits genannten Vorteilen. Die Befestigung der Vorrichtung erfolgt vorzugsweise reversibel durch Saugnäpfe oder dergleichen, so dass die Vorrichtung auf einfachste Weise an verschiedenen zu testenden Kraftwagen angebracht werden kann. Die Integration der Rechenmaschine erlaubt es, bereits während einer Testfahrt Auswertungen durchzuführen und Ergebnisse einzusehen, so dass die Parameter der Testfahrt gegebenenfalls angepasst werden können oder Nachjustierungen am Scheinwerfer durchgeführt werden können.

Es ist dabei besonders zweckmäßig, von der Kamera erfasste Bilddaten drahtlos an die Rechenmaschine übermittelbar sind. Die Rechenmaschine kann dann, beispielsweise in Form eines Notebooks, PDAs oder Tablets im Kraftwageninnenraum angeordnet sein, so dass die gemessenen Daten dem Fahrer unmittelbar zur Verfügung stehen.

Dabei ist es insbesondere vorteilhaft, wenn die Rechenmaschine zur Anzeige eines die Qualität charakterisierenden Auswertungsergebnisses ausgelegt ist. Die vorgegebenen Kriterien können dabei den bereits anhand des erfindungsgemäßen Verfahrens erläuterten entsprechen. Die unmittelbare Auswertung und Anzeige, beispielsweise in Form von Helligkeitskurven oder Falschfarbendarstellungen des Kamerabildes, die Bereiche mit hoher Flackerneigung hervorheben, ermöglicht dem Testfahrer eine unmittelbare Anpassung der Testbedingungen, so dass besonders aussagekräftige Daten erhoben werden können.

Es ist ferner vorteilhaft, wenn eine Bildaufnahmerate der Kamera wenigstens 200 Bilder/sec beträgt. Damit kann ein Flackern des Scheinwerfers im üblicherweise bei Xenonleuchten auftretenden Bereich zuverlässig erfasst werden.

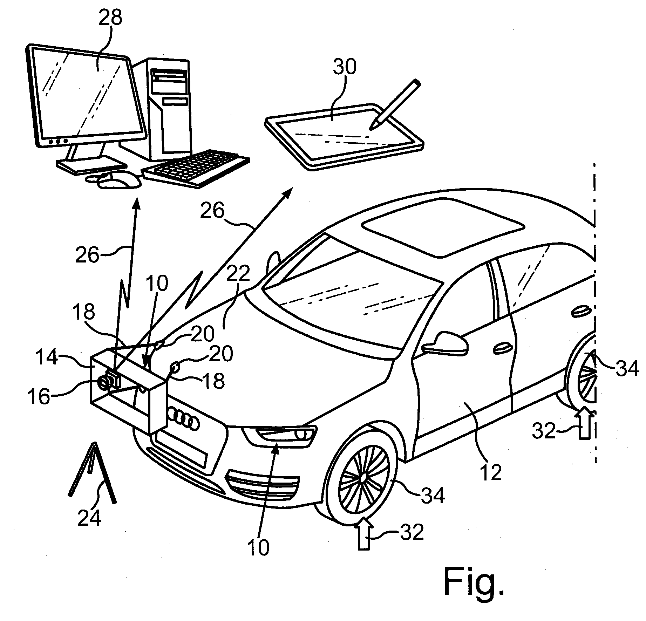

Im Folgenden wird die Erfindung und ihre Ausführungsformen anhand der Zeichnung näher erläutert. Die einzige Figur zeigt dabei eine schematische Darstellung eines Ausführungsbeispiels einer erfindungsgemäßen Vorrichtung bei ihrem Einsatz im Rahmen eines erfindungsgemäßen Verfahrens.

Um die Qualität eines Scheinwerfers 10 eines Kraftwagens 12 unter dynamischer Anregung bewerten zu können, wird ein Lichtkasten 14 mit einer auf den Scheinwerfer 10 gerichteten Kamera 16 am Kraftwagen 12 angeordnet. Dies kann über am Lichtkasten 14 befestigte Streben 18 geschehen, die mit Saugnäpfen 20 an der Außenverkleidung 22 des Kraftwagens 12 befestigt werden. Auf diese Weise kann der Scheinwerfer 10 bei Testfahrten beobachtet werden. Die Kamera wird während des Tests durch einen nicht dargestellten Akku versorgt.

Alternativ kann der Lichtkasten 14 auf einem Stativ 24 vor dem Kraftwagen 12 so angeordnet werden, dass er den Scheinwerfer 10 erfasst, so dass auf einfachste Weise Prüfstandsmessungen auf einem Rüttelprüfstand durchführbar sind.

Die von der Kamera erfassten Bilddaten werden drahtlos, beispielsweise durch eine Bluetooth-Verbindung 26 an einen jeweiligen Rechner 28, 30 übermittelt. Für Prüfstandsmessungen kann hierzu ein üblicher Desktop-PC 28 verwendet werden, während sich für Testfahrten die Verwendung eines Tablets, Laptops oder PDAs 30 anbietet.

Bei der Verwendung einer Schwarz-Weiß-Kamera 16 fallen dabei Rohdaten mit einer Rate von etwa 1 Megabyte/min an. Bei Prüfstandsversuchen kann daher die drahtlose Übertragung gegebenenfalls durch eine Ethernetverbindung ersetzt werden.

Da die Qualitätseigenschaften des Scheinwerfers 10 stark durch äußere Anregungen beeinflusst werden, werden während des Tests periodische Kräfte in Richtung der Pfeile 32 auf die Räder 34 des Kraftwagens 12 ausgeübt. Dies kann durch Befahren einer Rüttelstrecke oder durch einen Rüttelprüfstand erfolgen.

Ein wichtiges Qualitätskriterium für den Scheinwerfer 10 ist seine Flackerneigung. Ein Flackern des Scheinwerfers 10 kann insbesondere bei Xenonleuchten durch Resonanzschwingungen im Lichtbogen ausgelöst werden, die durch die äußere Schwingungsanregung hervorgerufen werden. Die Frequenz des Flackerns liegt dabei meist im Bereich von 10 bis 40 Hz, so dass zur zuverlässigen Erfassung etwa 200 Bilder/min mit der Kamera 16 aufgenommen werden müssen.

Um ein quantitatives Maß für die Flackerneigung zu finden, werden die Einzelbilder der Kamera 16 vom Rechner 28,30 in Segmente zerlegt. Bei einer Kameraauflösung von 1280x960 Pixel ist beispielsweise eine Aufteilung in 40x30 Segmente zweckmäßig. Für jedes Segment werden dann fortlaufend über Zeitabschnitte von z.B. 0,2 Sekunden die mittlere, maximale und minimale Helligkeit ermittelt. Aus dem zeitlichen Verlauf bestimmt sich ein quantitativer Flacker-Wert für jedes einzelne Segment. Die so ermittelten Flacker-Werte können dann zeitlich fortlaufend vom Rechner 28,30 beispielsweise als dem Graubild der Kamera 16 überlagerte Falschfarbendarstellung angezeigt werden, so dass der Testfahrer oder Prüfstandsnutzer fortlaufend detaillierte Informationen über das Flackern des Scheinwerfers 10 erhält.

Neben dem Lichtbogenflackern kann eine externe Schwingungsanregung auch mechanische Vibrationen von Komponenten des Scheinwerfers 10 auslösen. Diese können wiederum zu einer Verschiebung der Hell-Dunkel-Grenze des Scheinwerfers 10 führen, die im normalen Straßenverkehr zu einer unbeabsichtigten Blendung von entgegenkommenden Verkehrsteilnehmern führen kann.

Um solche Verschiebungen zu detektieren, wird zunächst durch den Rechner 28,30 die Hell-Dunkel-Grenze in einem Kamerabild bestimmt. Ist die Lage der Grenze bekannt, so kann die Kamera 16 in der Folge derart durch den Rechner 28, 30 angesteuert werden, dass nur noch ein schmaler Streifen um die Hell-Dunkel-Grenze aufgenommen wird. Der zeitliche Verlauf der Lage der Hell-Dunkel-Grenze kann dann wiederum durch den Rechner 28,30 ausgewertet werden, wobei insbesondere die Intensität von Schwingungen im Frequenzbereich von 10 bis 40 Hz bestimmt wird. Diese Intensitäten können dann wiederum als quantitatives Maß für das Zittern der Hell-Dunkel-Grenze als Falschfarbendarstellung dem Graubild der Kamera 16 überlagert dargestellt werden.

Eine weitere Einsatzmöglichkeit liegt in der Messung der Homogenität der Lichtverteilung des Scheinwerfers 10. Hierzu wird lediglich ein statisches, hochauflösendes Bild durch die Kamera 16 erfasst und an den Rechner 28, 30 übermittelt. Die Homogenität kann dann durch die Differenz zwischen minimaler und maximaler Helligkeit, durch eine Tonwertkurve oder dgl. quantifiziert werden.

Insgesamt ergibt sich so ein zuverlässiges und reproduzierbares quantitatives Verfahren zur Qualitätskontrolle von Scheinwerfern 10, welches sowohl zur Qualitätskontrolle in der Serienfertigung, als auch zur Validierung konstruktiver Maßnahmen eingesetzt werden kann.

## Patentansprüche

1. Verfahren zum Bewerten einer Qualität eines Scheinwerfers (10) eines Kraftwagens (12) im Fahrtbetrieb und/oder im Betrieb auf einem Rüttelprüfstand,
bei welchem der Scheinwerfer (10) mittels einer Kamera (16) beobachtet wird, und ein Kamerabild und/oder eine zeitliche Abfolge von Kamerabildern gemäß zumindest eines vorgegebenen Kriteriums bewertet werden, **dadurch gekennzeichnet, dass**
die Kamera (16) auf den Scheinwerfer (10) gerichtet ist und dass das wenigstens eine vorgegebene Kriterium eine zeitliche Variation einer Helligkeit und/oder Helligkeitsverteilung umfasst, mit dem ein Lichtbogenflackern erfasst, quantifiziert und bewertet wird.

2. Verfahren nach Anspruch 1,
**dadurch gekennzeichnet, dass**
das wenigstens eine vorgegebene Kriterium eine Helligkeitsverteilung umfasst.

3. Verfahren nach einem der Ansprüche 1 oder 2,
**dadurch gekennzeichnet, dass**
zur Bestimmung der Helligkeitsverteilung ein jeweiliges Kamerabild in eine vorgegebene Anzahl von Teilbildern aufgeteilt und die Helligkeit der jeweiligen Teilbilder bestimmt wird.

4. Verfahren nach Anspruch 3,
**dadurch gekennzeichnet, dass**
für eine zeitliche Abfolge jeweiliger Teilbilder für jedes Teilbild ein Minimum, ein Mittelwert und ein Maximum der Helligkeit für einen vorgegebenen Zeitabschnitt bestimmt wird.

5. Verfahren nach einem der Ansprüche 1 bis 4,
**dadurch gekennzeichnet, dass**
das wenigstens eine vorbestimmte Kriterium eine Lage einer Hell-Dunkel-Grenze des Scheinwerfers (10) umfasst.

6. Vorrichtung zum Bewerten einer Qualität eines Scheinwerfers (10) eines Kraftwagens (12) im Fahrtbetrieb und/oder im Betrieb auf einem Rüttelprüfstand, mit einem Lichtkasten (14), welcher an dem Kraftwagen (12) befestigbar ist, so dass der Scheinwerfer (10) in den Lichtkasten (14) strahlt, wobei der Lichtkasten (14) eine Kamera (16) zum Beobachten des Schein
werfers (10) umfasst, wobei die Kamera (16) auf den Scheinwerfer (10) gerichtet ist, und eine Rechenmaschine (28, 30) zur Auswertung der durch die Kamera (16) erfassten Bilddaten vorgesehen ist, wobei die Rechenmaschine (28, 30) zum Auswerten der Bilddaten nach zumindest einem vorgegebenen Kriterium und das wenigstens eine vorgegebene Kriterium eine zeitlich Variation einer Helligkeit und/oder Helligkeitsverteilung umfasst, mit dem das Lichtbogenflackern erfassbar, quantifizierbar und bewertbar ist.

7. Vorrichtung nach Anspruch 6,
**dadurch gekennzeichnet, dass**
von der Kamera (16) erfasste Bilddaten drahtlos an die Rechenmaschine (28, 30) übermittelbar sind.

8. Vorrichtung nach Anspruch 6 oder 7,
**dadurch gekennzeichnet, dass**
die Rechenmaschine (28, 30) zur Anzeige eines die Qualität charakterisierenden Auswertungsergebnisses ausgelegt ist.

9. Vorrichtung nach einem der Ansprüche 6 bis 8,
**dadurch gekennzeichnet, dass**
eine Bildaufnahmerate der Kamera (16) wenigstens 200 Bilder/sec beträgt.

## Claims

1. Method for evaluating a quality of a headlamp (10) of a motor vehicle (12) while driving and/or during operation on a shaker rig, during which the headlamp (10) is observed by means of a camera (16) and a camera image and/or a chronological sequence of camera images is/are evaluated according to at least one predefined criterion, **characterized in that** the camera (16) is directed towards the headlamp (10), and **in that** the at least one predefined criterion comprises a change in a brightness and/or brightness distribution over time, by which an arc flicker is detected, quantified and evaluated.

2. Method according to claim 1, **characterized in that** the at least one predefined criterion comprises a brightness distribution.

3. Method according to any one of claims 1 or 2, **characterized in that**, in order to determine the brightness distribution, a respective camera image is divided into a predefined number of sub-images and the brightness of the respective sub-images is determined.

4. Method according to claim 3, **characterized in that**, for a chronological sequence of respective sub-images, for each sub-image a minimum, a mean and a maximum of the brightness is determined for a predefined time interval.

5. Method according to any one of claims 1 to 4, **characterized in that** the at least one predefined criterion comprises a position of a light/dark boundary of the headlamp (10).

6. Apparatus for evaluating a quality of a headlamp (10) of a motor vehicle (12) while driving and/or during operation on a shaker rig, comprising a light box (14) which can be fastened to the motor vehicle (12) so that the headlamp (10) shines into the light box (14), wherein the light box (14) includes a camera (16) for observing the headlamp (10), wherein the camera (16) is directed towards the headlamp (10), and a computer (28, 30) is provided for evaluating the image data captured by the camera (16), wherein the computer (28, 30) for evaluating the image data according to at least one predefined criterion and the at least one predefined criterion comprises a change in a brightness and/or brightness distribution over time, by which the arc flicker can be detected, quantified and evaluated.

7. Apparatus according to claim 6, **characterized in that** image data captured by the camera (16) can be transmitted wirelessly to the computer (28, 30).

8. Apparatus according to claim 6 or 7, **characterized in that** the computer (28, 30) is configured to display an evaluation result characterizing the quality.

9. Apparatus according to any one of claims 6 to 8, **characterized in that** an image capture rate of the camera (16) is at least 200 images/second.

## Revendications

1. Procédé d'évaluation de la qualité d'un projecteur (10) d'un véhicule automobile (12) lors d'un fonctionnement sur route et/ou lors d'un fonctionnement sur un banc d'essai à secousses,
selon lequel le projecteur (10) est observé au moyen d'une caméra (16) et une image de caméra et/ou une suite temporelle d'images de caméra sont évaluées selon au moins un critère prescrit,
**caractérisé en ce que** la caméra (16) est dirigée vers le projecteur (10) et **en ce que** l'au moins un critère prescrit comprend une variation temporelle d'une luminosité et/ou d'une répartition de luminosité avec laquelle un tremblotement de l'arc lumineux est détecté, quantifié et évalué.

2. Procédé selon la revendication 1, **caractérisé en ce que** l'au moins un critère prescrit comprend une répartition de luminosité.

3. Procédé selon l'une des revendications 1 ou 2, **caractérisé en ce que**, pour déterminer la répartition de luminosité, on divise une image de caméra respective en un nombre prescrit d'images partielles et on détermine la luminosité des images partielles respectives.

4. Procédé selon la revendication 3, **caractérisé en ce que**, pour une suite temporelle d'images partielles respectives, on détermine pour chaque image partielle un minimum, une moyenne et un maximum de la luminosité pour un intervalle de temps prescrit.

5. Procédé selon l'une des revendications 1 à 4,
**caractérisé en ce que** l'au moins un critère prescrit comprend une position d'une limite clair-sombre du projecteur (10).

6. Dispositif d'évaluation de la qualité d'un projecteur (10) d'un véhicule automobile (12) lors d'un fonctionnement sur route et/ou lors d'un fonctionnement sur un banc d'essai à secousses, avec une caisse de lumière (14) qui peut être fixée sur le véhicule automobile (12) de telle sorte que le projecteur (10) rayonne dans la caisse de lumière (14), la caisse de lumière (14) comprenant une caméra (16) pour observer le projecteur (10), la caméra (16) étant dirigée vers le projecteur (10) et un ordinateur (28, 30) étant prévu pour évaluer les données d'images acquises par la caméra (16), l'ordinateur (28, 30) étant prévu pour l'évaluation des données d'images selon au moins un critère prescrit et l'au moins un critère prescrit comprenant une variation temporelle d'une luminosité et/ou d'une répartition de luminosité avec laquelle un tremblotement de l'arc lumineux peut être détecté, quantifié et évalué.

7. Dispositif selon la revendication 6,
**caractérisé en ce que** des données d'images acquises par la caméra (16) peuvent être transmises sans fil à l'ordinateur (28, 30).

8. Dispositif selon la revendication 6 ou 7,
**caractérisé en ce que** l'ordinateur (28, 30) est conçu pour indiquer un résultat d'évaluation caractérisant la qualité.

9. Dispositif selon l'une des revendications 6 à 8, **caractérisé en ce que** le taux d'acquisition d'images de la caméra (16) est d'au moins 200 images par seconde.
